# EUROPEAN PATENT APPLICATION

(11) **EP 1 526 673 A1**
(43) Date of publication of application: **27.04.2005**
(21) Application number: 03741303.6
(22) Date of filing: 10.07.2003
(51) Int. Cl.: H04L 1/16

(54) **COMMUNICATION DEVICE AND DATA RETRANSMISSION CONTROL METHOD**

(30) Priority: 31.07.2002 JP 2002223828
(71) Applicant: MATSUSHITA ELECTRIC INDUSTRIAL CO., LTD., Kadoma-shi, Osaka 571-8501 (JP)
(72) Inventor: IOCHI, Hitoshi, Yokohama-shi, Kanagawa 235-0023 (JP); MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: PCT/JP2003/008746
(87) International publication number: WO 2004/014014

(57) **Abstract**

Confidence calculator 211 finds confidence based on the measurement result of the received SIR. Based on the confidence supplied from confidence calculator 211, ACK/NACK decider 212 makes a decision for the then modulated ACK signal with reference to a predetermined threshold level. For the ACK/NACK decision result, scheduler 251 instructs buffer 252 to transmit new data when an ACK signal is received, and to transmit the data of the previous transmission when a NACK signal is received. By this means, it is possible to prevent loss of the received data in the communication terminal apparatus that occurs when a NACK signal is erroneously received and the data is not retransmitted from the associated communication terminal apparatus.

## Description

### Technical Field

The present invention relates to a communication apparatus and a data retransmission control method for use in a wireless communication system where high speed packet transmission is performed on downlink channels.

### Background Art

Heretofore, for example, in the field of wireless communication systems, HSDPA (High Speed Downlink Packet Access) and the like have been proposed whereby a plurality of communication terminal apparatuses (i.e. mobile stations) share high speed and high volume downlink channels and perform high speed packet communication on downlink channels. With high speed packet transmission schemes including HSDPA, multiplexing is performed using the time unit of slots and the like or spreading code. Individual communication terminal apparatuses each observe the condition of the propagation path on downlink channels from the base station apparatus, and report the observation result to the base station apparatus.

At the base station apparatus, techniques that are used to improve the efficiency of transmission include scheduling techniques whereby the base station apparatus selects the communication terminal apparatuses of good conditions based on the above propagation path condition reports (which corresponds to the CQI (Channel Quality Indicator) signal in HSDPA) from the communication terminal apparatuses and performs transmission, and adaptive modulation techniques whereby the base station apparatus adaptively changes the modulation schemes and error correction codes (MCS: Modulation and Coding Scheme) according to the conditions on the propagation paths.

The base station apparatus performs transmission to the communication terminal apparatuses while performing scheduling and adaptive modulation. The communication terminal apparatus, when the reception quality of received data is satisfactory, transmits an ACK (ACKnowledgment) signal (i.e. positive acknowledgement signal) that signifies a successful reception to the base station apparatus. By contrast with this, when the reception quality of the received data is unsatisfactory, the communication terminal apparatus transmits a NACK (Negative ACKnowledgment) signal (i.e. negative acknowledgment signal) that signifies a reception failure to the base station apparatus.

Upon receiving the NACK signal, the base station apparatus schedules to retransmit the same data. Thus, the ACK signal and the NACK signal make a significant piece of information when the base station apparatus determines whether or not to retransmit the data to the communication terminal apparatus.

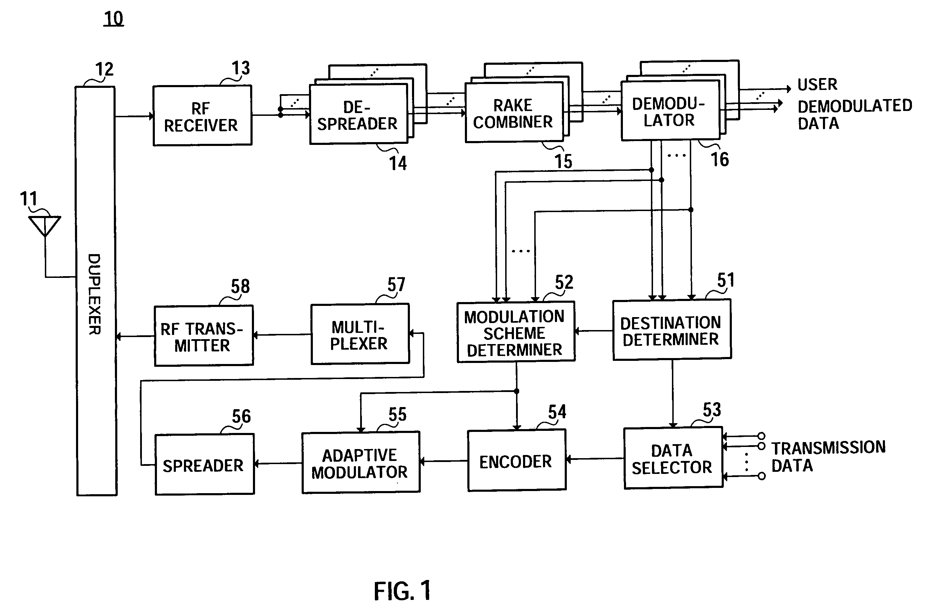

Now, FIG.1 shows the configuration of a prior art base station apparatus. That is, FIG.1 is a block diagram showing the configuration of a prior art base station apparatus, and this base station apparatus 10 receives a signal received through antenna 11 in RF (Radio Frequency) receiver 13 through duplexer 12.

RF receiver 13 converts the received signal of radio frequency into a baseband digital signal, and supplies the result to despreader 14. Despreader 14, RAKE combiner 15, and demodulator 16 are provided in the same number as the communication terminals engaged in wireless communication, and perform demodulation processings upon the received baseband signal supplied from RF receiver 13 in sequence, including despreading processing, RAKE combining processing, and error correction decoding processing, and thereby obtain the demodulated data from each communication terminal apparatus (i.e. user).

This demodulated data is supplied to destination determiner 51 and modulation scheme determiner 52.Based upon whether or not the signal supplied form demodulator 16 is an ACK signal or a NACK signal, destination determiner 51 decides whether or not to retransmit the same data.

That is to say, when the signal supplied from modulator 16 is a NACK signal, this means a failed reception in the communication terminal apparatus of the source of this NACK signal, and, based on this NACK signal, destination determiner 51 determines to retransmit the previously transmitted data (#i) to the associated communication terminal.

By contrast with this, when the signal supplied from demodulator 16 is an ACK signal, this means a successful reception in the communication terminal apparatus of the source of this ACK signal, and, based on this ACK signal, destination determiner 51 determines to transmit the next data (#i+ 1) to the associated communication terminal apparatus.

Thus, information that represents the communication terminal apparatus of the destination determined in destination determiner 51 and information that specifies the transmission data are supplied to data selector 53. Data selector 53 selects the transmission data for each communication terminal apparatus.

In addition, based on a CQI signal supplied from demodulator 16 as downlink channel condition report information, modulation scheme determiner 52 determines the coding rate and modulation scheme, and supplies the decision results to encoder 54 and adaptive modulator 55.

Encoder 54 encodes the transmission data at a coding rate based on the information representing the coding rate supplied from modulation scheme determiner 52. Moreover, adaptive modulator 55 modulates the encoded data (i.e. packet data) supplied from encoder 54 using the modulation scheme determined by modulation scheme determiner 52. The modulation scheme is selectively determined from the schemes including QPSK (Quaternary Phase Shift Keying), 16QAM (Quadrature Amplitude Modulation), and 64QAM.

By this means, in encoder 54 and in adaptive modulator 55, encoding and modulation are performed based on the CQI signal.

The data modulated in adaptive modulator 55 is subjected to spreading processing in spreader 56 and thereafter supplied to multiplexer 57.Multiplexer 57 multiplexes the individual data to be transmitted to the communication terminal apparatuses, and supplies the result to RF transmitter 58.RF transmitter 58 converts the baseband digital signal supplied from multiplexer 57 into a radio frequency signal, and transmits the result via duplexer 12 and antenna 11.

Thus, prior art base station apparatus 10 makes decisions for data retransmission based on the ACK signals and NACK signals transmitted from communication terminal apparatuses.

Now, the communication terminal apparatus (i.e. mobile station: MS) is configured to report to base station apparatus 10 whether or not data from base station apparatus 10 has been received without error with ACK signals and NACK signals. However, if the communication terminal apparatus transmits to base station apparatus 10 a NACK signal that signifies a failed reception of certain data #1 and this base station apparatus 10 nevertheless erroneously receives this NACK signal for an ACK signal, this base station apparatus 10 decides that data #i has been successfully received in the communication terminal apparatus, and moves onto transmission processing for data #i + 1 following above data #i.

Consequently, despite the failure of receiving data #1 in the communication terminal apparatus, base station apparatus 10 moves onto transmission processing for data #i + 1 following above data #i, and this creates the problem of loss of data #i in the communication terminal apparatus.

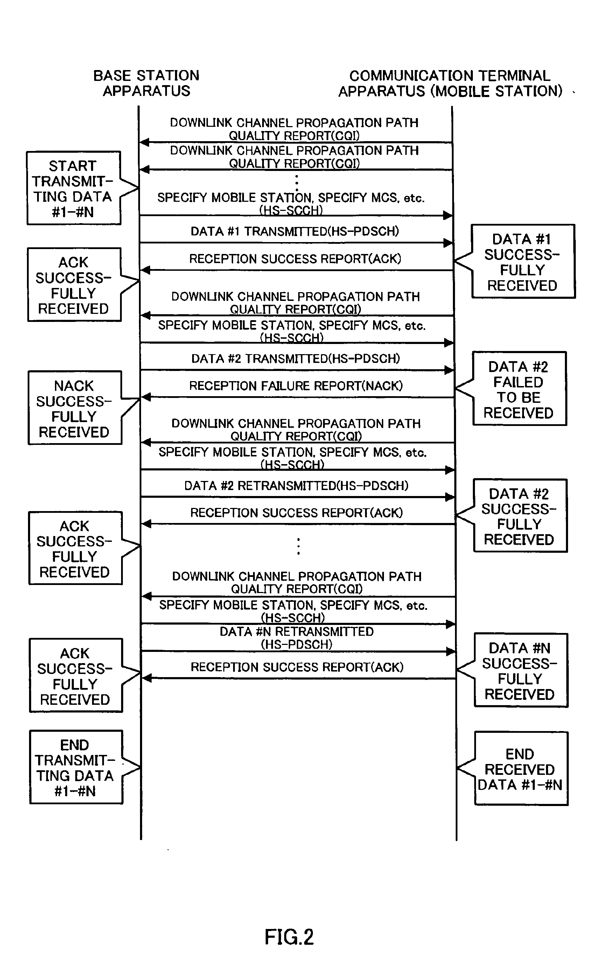

Now, FIG.2 is a sequence diagram showing the steps of data transmission and reception between a base station apparatus and a communication terminal apparatuses (i.e. mobile station apparatus). This FIG.2 shows a case where the ACK signals and the NACK signals transmitted from the communication terminal apparatus (i.e. mobile station apparatus) to the base station apparatus are all correctly received at the base station apparatus.

As shown in this FIG.2, when the communication terminal apparatus (i.e. mobile station apparatus) transmits a downlink channel propagation path quality report (i.e. CQI) to the base station apparatus, the base station apparatus commences the processing for transmission of data #1-#N by a coding rate and modulation scheme based on this CQI signal.

In this processing, the base station apparatus first specifies the communication terminal apparatus to transmit to by the HS-SCCH (Shared Control Channel of HS-PDSCH) and the MCS.(TFRI: Transport-format and Resource related Information). Incidentally, the HS-SCCH is a downlink shared channel, upon which information about resource allocation (TFRI: Transport-format and Resource related Information) and information about H-ARQ (Hybrid-Automatic Repeat Request) control are transmitted.

Following this, the base station apparatus transmits data #1 by the HS-PDSCH (High Speed-Physical Downlink Shared Channel). Incidentally, the HS-PDSCH is a downlink shared channel for use for packet transmission. The communication terminal apparatus, upon successfully receiving data #1, transmits an ACK signal and thereby makes a reception success report to the base station apparatus.

The base station apparatus, after having successfully received the ACK signal from the communication terminal apparatus, following this, performs the transmission of data #2 in similar fashion with data #1. Then, when the communication terminal apparatus fails to receive this data #2, the base station apparatus transmits a NACK signal and thereby makes a reception failure report to the base station apparatus.

The base station apparatus, having successfully received the NACK signal from the communication terminal apparatus, again transmits data #2. By this means, when having correctly received an ACK signal or a NACK signal transmitted from the communication terminal apparatus is the base station apparatus only then able to perform the processing responsive to the ACK signal or the NACK signal (i.e. transmit the next data or retransmit the data) and make the communication terminal apparatus securely receive data #1-data #N.

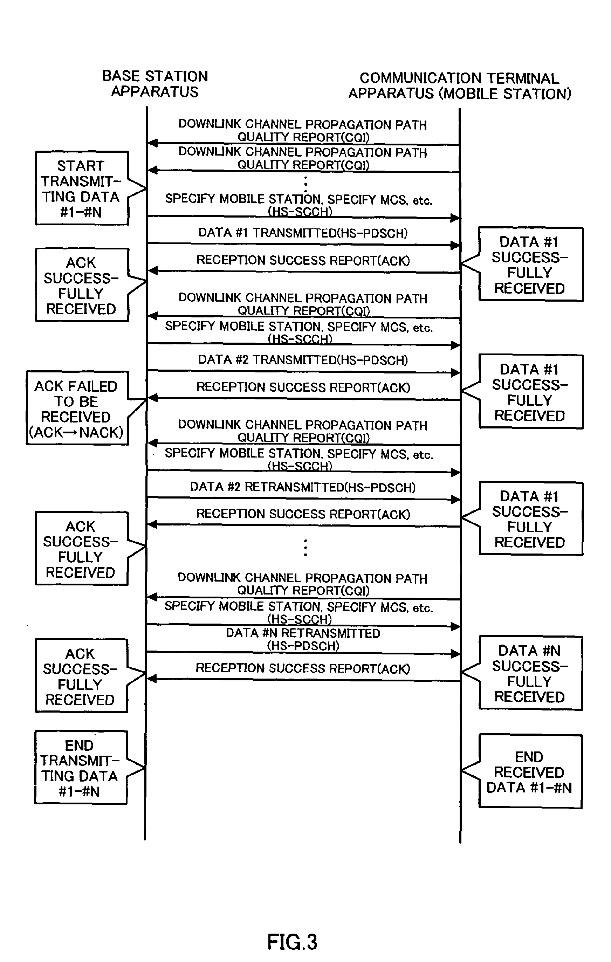

By contrast with this, FIG.3 is a sequence diagram illustrating a sample case where a base station apparatus fails to receive an ACK signal transmitted from a communication terminal apparatus and erroneously receives this ACK signal for a NACK signal.

As shown in FIG.3, from the communication terminal apparatus that has successfully received data #2, an ACK signal to signify this success is transmitted, thereby making a reception success report to the base station apparatus. Then, if the base station apparatus fails to receive this ACK signal, the base station apparatus erroneously receives this ACK signal for a NACK signal. Based on this reception result (i.e. result of a reception error), the base station apparatus decides that the communication terminal apparatus has failed to receive data #2.

Then, based on this decision result, the base station apparatus transmits data #2 again. As a result, the communication terminal apparatus, despite having transmitted an ACK signal, receives same data #2 again. Thus, when the base station apparatus fails to receive an ACK signal and erroneously decides the reception of the ACK signal for the reception of a NACK signal, same data #2 is again transmitted from the base station apparatus. Later, when the communication terminal apparatus successfully receives the retransmission of data #2, an ACK signal is transmitted again from this communication terminal apparatus. The base station apparatus, when successfully receiving this ACK signal, moves onto transmission processing for data #3. Thus, although same data #2 is transmitted a plurality of times, this does not cause serious deficiency such as loss of data in the communication terminal apparatus.

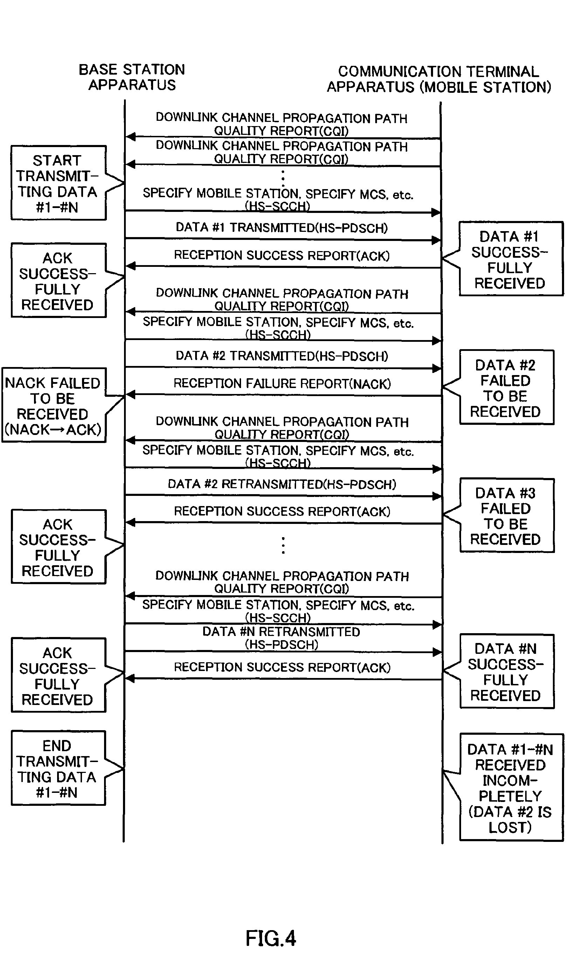

By contrast with this, FIG.4 is a sequence diagram illustrating a sample case where a base station apparatus fails to receive a NACK signal transmitted from a communication terminal apparatus and erroneously receives this NACK signal for an ACK signal.

As shown in FIG.4, from the communication terminal apparatus that has failed receiving data #2, a NACK signal signifying this failure is transmitted, thereby making a reception failure report to the base station apparatus. Then, if the base station apparatus fails to receive this NACK signal, the base station apparatus erroneously receives this NACK signal for an ACK signal. Based on this reception result (i.e. result of a reception error), the base station apparatus decides that the communication terminal apparatus has successfully received data #2.

Then, based on this decision result, the base station apparatus transmits data #3 following data #2. As a result, the communication terminal apparatus, despite having transmitted a NACK signal, is again unable to receive data #2, which results in a state where this data #2 is lost. Thus, when the base station apparatus fails to receive a NACK signal and erroneously decides the reception of the NACK signal for the reception of an ACK signal, despite a retransmission request, this data #2 addressed by the retransmission request is not transmitted from the base station apparatus, and this places the communication terminal apparatus in a state where this data #2 is lost. Thus, loss of data in the communication terminal apparatus results in a severe deficiency where the data necessary for demodulation of the received data is missing.

In this regard, 3GPP standard requires that the error rate for NACK signals be below 10⁻⁴ (below 10⁻² for the error rate for ACK signals).

However, according to TSG R1-02-0364, LG Electronics, "On the HS-DPCCH performance with consideration of the channel estimation," a channel estimation is executed in 3 slots and thereby the receiving performance improves. However, it is possible that, when a mobile station (i.e. communication terminal apparatus) moves at 30 [km/h], an error floor is created and makes it difficult to fulfill the performance of demand.

Moreover, in case the base station apparatus simply demodulates ACK signals and NACK signals, the error floor of NACK signals are erroneously decided to be ACK signals, in which case a decrease in throughput is inevitable.

Furthermore, even if amendment is introduced to the standard in the future, it is still likely that it is difficult to always fulfill the above requirement on poor propagation path. Furthermore, even when the requirement that the error rate for NACK signals be below 10⁻⁴ is fulfilled, if the restoration of data is difficult unless all N pieces of data are present, loss of one of the N pieces of data due to a reception error of a NACK signal still requires retransmission of the entire data, and this results in a problem of severe deterioration in throughput.

### Disclosure of Invention

It is an object of the present invention to provide a communication apparatus and a data retransmission control method that prevent loss of received data due to a reception error of negative acknowledgment signals (i.e. NACK signals).

This object is achieved by finding the confidence of an ACK signal received at a base station apparatus, and by interpreting a low confidence as a reception error of a negative acknowledgment signal (NACK signal) for a positive acknowledgment signal (ACK signal) and retransmitting the data.

### Brief Description of Drawings

FIG.1 is a block diagram showing a configuration of a prior art base station apparatus;
FIG.2 is a sequence diagram showing the steps of data transmission and reception between a base station apparatus and a communication terminal apparatus (i.e. mobile station apparatus);
FIG.3 is a sequence diagram showing the steps of data transmission and reception between a base station apparatus and a communication terminal apparatus (i.e. mobile station apparatus);
FIG.4 is a sequence diagram showing the steps of data transmission and reception between a base station apparatus and a communication terminal apparatus (i.e. mobile station apparatus);
FIG.5 shows a system configuration of an embodiment of the present invention;
FIG.6 is a block diagram showing a configuration of a control station apparatus according to an embodiment of the present invention;
FIG.7 is a block diagram showing a configuration of a base station apparatus according to an embodiment of the present invention;
FIG.8 is a simplified line diagram for illustration of a confidence calculation method;
FIG.9 is a flowchart showing the steps of ACK/NACK decision processing;
FIG.10 is a block diagram showing a configuration of a communication terminal according to an embodiment of the present invention;
FIG.11 is a sequence diagram showing the steps of data transmission and reception between a base station apparatus and a communication terminal apparatus (i.e. mobile station apparatus);
FIG.12 is a simplified line diagram for illustration of a confidence calculation method according to another embodiment;
FIG.13 is a block diagram showing a configuration of a base station apparatus according to another embodiment; and
FIG. 14 is a flow chart showing the steps of threshold level determining processing according to another embodiment.

### Best Mode for Carrying Out the Invention

Embodiments of the present invention will be described below in detail with reference to the accompanying drawings.

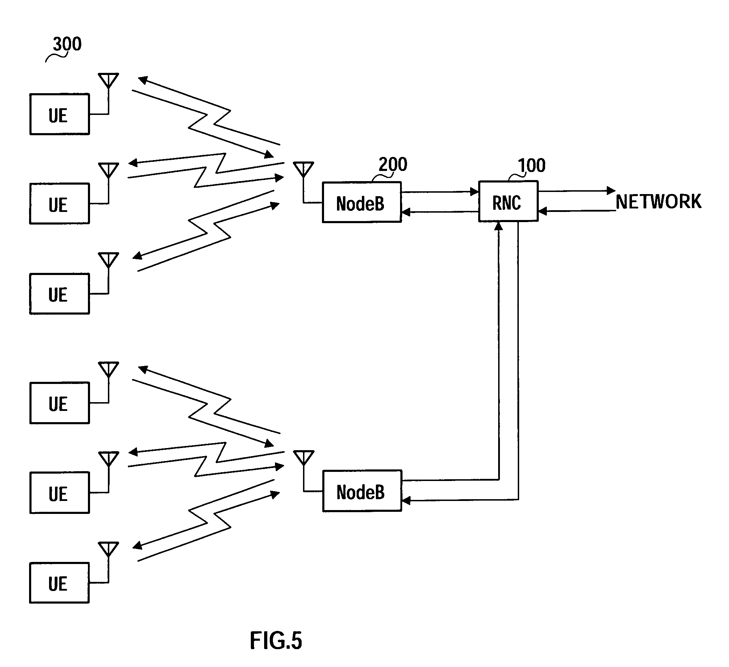

FIG.5 shows the system configuration of this embodiment of the present invention.

Referring to FIG.5, controller station (RNC) 100 connects with a plurality of base station apparatuses 200 (Node B) by wire, and each base station apparatus 200 communicates with a plurality of communication terminal apparatuses (UE) 300 by radio. Incidentally, the following description assumes a case where control station apparatus 100 connects with two base station apparatuses 200 by wire and each base station apparatus 200 communicates with three communication terminal apparatuses 300 by radio.

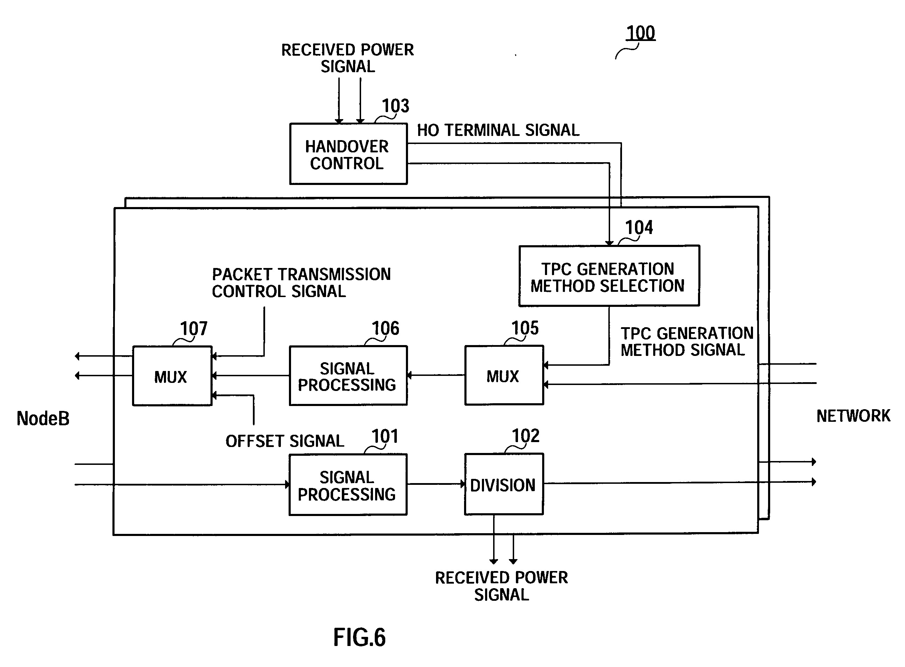

Now, the configuration of control station apparatus 100 will be described with reference to the block diagram of FIG.6.

Signal processor 101, provided in the same number as the connecting base station apparatuses, receives a signal transmitted from communication terminal apparatus 300 and decoded in base station apparatus 200, processes this signal into a suitable state for transmission on a network, and outputs the result to divider 102.

Divider 102, provided in the same number as the connecting base station apparatuses, divides the output signal from signal processor 101 into the data and the control signal. The data is output onto the network. The control signal separated from the data at divider 102 contains a signal (hereinafter "received power signal") that represents the received power of the shared control channel at nearby base station apparatuses measured by communication terminal apparatus 300.

On a per communication terminal apparatus basis, handover controller 103 decides whether or not the communication terminal apparatus is in an HO state--that is, whether or not it is at a cell edge--based on the received power signal, and outputs a signal (hereinafter "HO signal") representing the decision result to TPC generation method selector 104.

TPC generation method selector 104, provided in the same number as the connecting base station apparatuses, selects a TPC command generation method whereby, at a communication terminal apparatus receiving HSDPA service and in an HO state, the received SIR of the A-DPCH from the primary base station apparatus achieves the target SIR (hereinafter "TPC command generation method of primary standard"). On the other hand, for a communication terminal apparatus receiving HSDPA service yet not in a HO state, a TPC command generation method is selected whereby the composite level of the SIR' s of the DPCH and the A-DPCH of the connecting base station apparatus achieves the target SIR. Then, TPC command generation method selector 104 outputs a signal (hereinafter "TPC command generation method signal") that represents the TPC command generation method of selection to multiplexer (MUX) 105.

Multiplexer 105, provided in the same number as the connecting base station apparatuses, multiplexes the TPC generation method signal upon an input signal from the network, and outputs the result to signal processor 106. Signal processor 106, provided in the same number as the connecting base station apparatuses, processes the output signal from multiplexer 105 into a suitable state for transmission by the base station apparatus, and outputs the result to multiplexer 107.

Multiplexer 107, provided in the same number as the connectingbase station apparatuses, multiplexes a packet transmission control signal and an offset signal that represents an offset level for the transmission power for the A-DPCH of the HS-SCCH upon the output signal from signal processor 106, and outputs the result to base station apparatus 200.

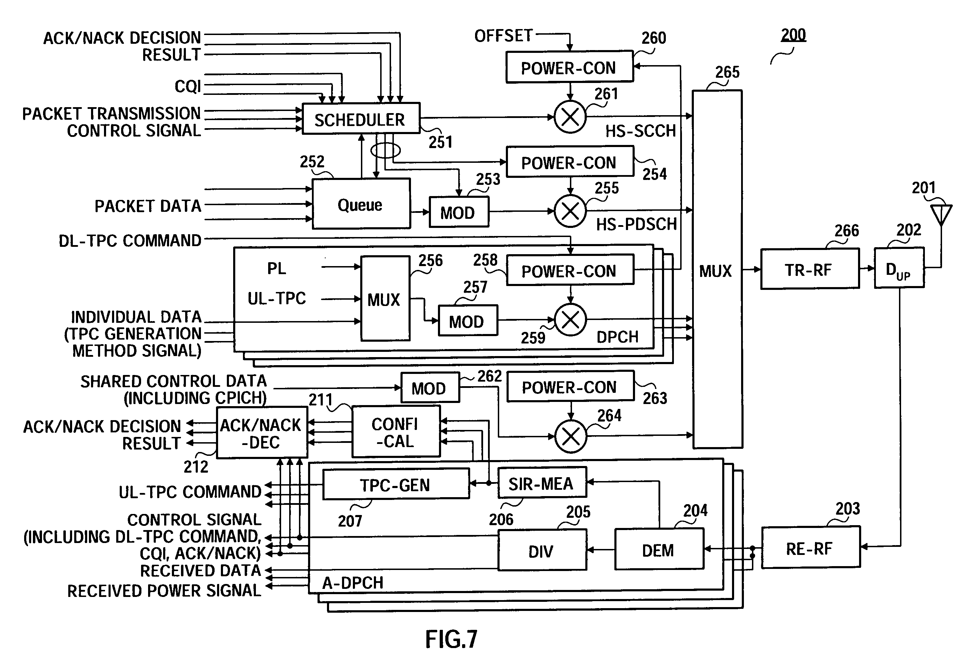

Next, the configuration of base station apparatus 200, which is one example of a communication terminal apparatus of the present invention, with reference to the block diagram of FIG.7. Base station apparatus 200 receives the individual data, the packet data, and the packet transmission control signal and the offset signal that are to be transmitted to the terminal apparatuses, from control station apparatus 100. In addition, base station apparatus 200 receives the signals transmitted by radio from the connecting communication terminal apparatuses.

Duplexer 202 outputs a signal received by antenna 201 to RF receiver (RE-RF) 203. In addition, duplexer 202 transmits a signal output from RF transmitter (TR-RF) 266 from antenna 201 by radio.

RF receiver 203 converts the received signal of radio frequency, output from duplexer 202, into a baseband digital signal, and outputs the result to demodulator (DEM) 204.

Demodulator 204, provided in the same number as the communication terminal apparatus engaged in wireless communication, performs demodulation processings on the received baseband signal, including despreading, RAKE combining, and error correction decoding, and outputs the result to divider (DIV) 205.

Divider 205 divides the output signal from demodulator 204 into the data and the control signal. The control signal separated in divider 205 contains a DL (Down Link)-TPC command, a CQI signal, an ACK/NACK signal, and a received power signal and the like. The CQI signal and the ACK/NACK signal are output to scheduler 251. The DL-TPC command is output to transmission power controller (POWER-CON) 258. The data and the received power signal are output to control station apparatus 100.

SIR measurer (SIR-MEA) 206, provided in the same number as the communication terminal apparatuses engaged in wireless communication, measures the received SIR of the uplink channel from the desired signal level and the interference signal level measured during the modulation process, and outputs a signal that represents the SIR to TPC command generator (TPC-GEN) 207. A case is described here with this embodiment where the received symbol that corresponds to the received ACK/NACK signal is used in the measurement of the received SIR.

TPC command generator 207, provided in the same number as the communication terminal apparatuses engaged in wireless communication, generates UL(Up Link)-TPC commands that instruct to increase or decrease transmission power on the uplink channel according to the relationship between the received SIR of the uplink channel and the target SIR in terms of scale.

In addition, SIR measurer 206 outputs the measured received SIR (Signal to Interference Ratio) on the uplink channel to confidence calculator (CONFI-CAL) 211. Confidence calculator 211 finds the confidence based on the measurement result of the received SIR (hereinafter "measurement SIR"), measured at SIR measurer 206.

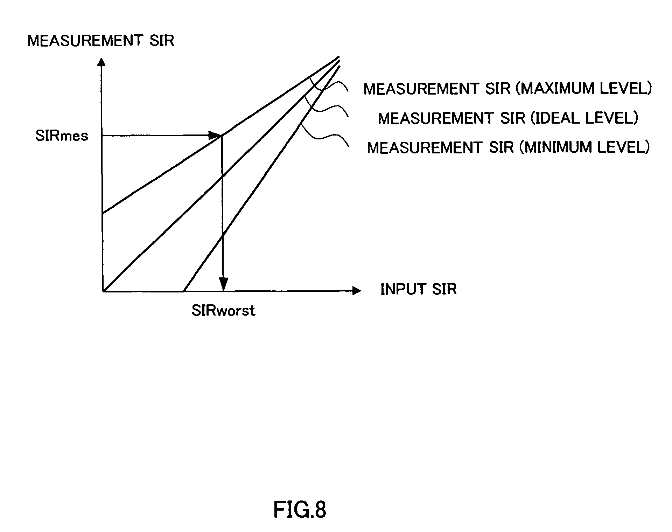

To find this confidence, confidence calculator 211 is configured to use a table that is stored in advance and shows the relationships between the input SIR and the measurement SIR (max level). That is, FIG.8 is a table that shows the relationships between the input SIR and the measurement SIR (max level) based upon the actual measurement level. In this FIG.8, the input SIR means the actual SIR, and the measurement SIR means the measured SIR.

As shown in this FIG. 8, the measurement SIR is subject to variation depending on the measurement environment and the signal level. For example, even when the actual SIR (i.e. input SIR) stays at the same level, the level of the measurement SIR may vary between the maximum level and the minimum level.

Therefore, for the table stored in confidence calculator 211, the relationship between the maximum measurement SR and the input SIR is used. By this means, the input SIR (i.e. the actual SIR) found from the measurement SIR with reference to the table is designed to constantly assume the minimum level (i.e. the worst level), and the actual SIR (i.e. the input SIR) found thus is used as the confidence as it is. As a result, it never occurs that an SIR level that is greater than the actual SIR level is used as the confidence--that is, a confidence greater than the actual confidence is never obtained. By this means, it is possible to prevent the negative consequences of finding greater confidence than the actual confidence (including determining an ACK signal as an ACK signal when this ACK signal has a low confidence and therefore should be determined as a NACK signal).

Confidence calculator 211 outputs the confidence obtained thus, to ACK/NACK decider (ACK/NACK-DEC) 212.Based upon the confidence supplied from confidence calculator 211, ACK/NACK decider 212 determines the then demodulated ACK signal based upon a predetermined threshold level provided in advance.

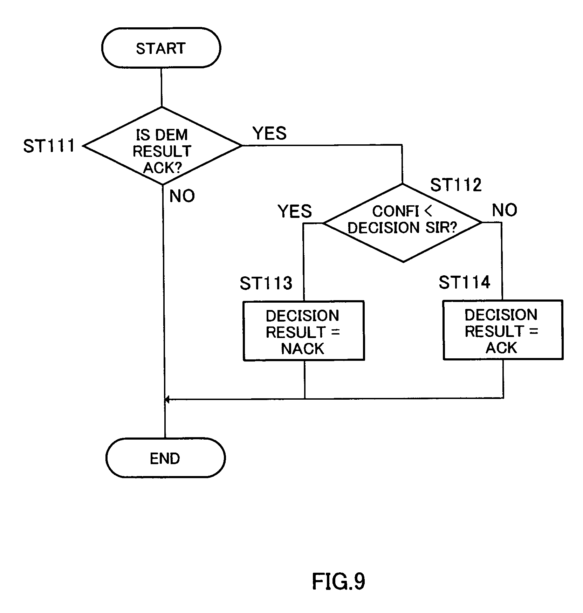

FIG. 9 is a flowchart showing the steps in the decision processing in ACK/NACK decider 212. As shown in this FIG.9, ACK/NACK decider 212 determines, in step ST111, whether or not the demodulation result output from divider 205 is an ACK signal.

Then, when a negative result is obtained in step ST111, this means that the demodulated signal is a NACK signal, and thereupon ACK/NACK decider 212 outputs the demodulated NACK signal to scheduler 251 as a decision result. By this means, when the demodulation result is a NACK signal, this NACK signal is supplied as it is to scheduler 251.

By contrast with this, when a positive result is obtained in step ST111, this means that the demodulated signal is an ACK signal, and thereupon ACK/NACK decider 212 proceeds to step ST112 and determines whether or not the confidence calculated at confidence calculator 211 (that is, the confidence of the then modulated ACK signal) is greater than the decision threshold level provided in advance.

In this step ST112, if a negative result is obtained, this means that the confidence (i.e. the confidence of the then demodulated ACK signal) obtained at confidence calculator 211 through use of the table described above with reference to FIG.8 is high enough to be considered reliable, and thereupon ACK/NACK decider 212 proceeds to step ST114 and makes a decision result of an ACK signal, which is the same as the demodulation result, and outputs this to scheduler 251.

In contrast, if a positive result is obtained in step ST112, this means that the confidence (i.e. the confidence of the then demodulated ACK signal) found at confidence calculator 211 through use of the table described above with reference to FIG.8 is not reliable enough, and thereupon ACK/NACK decider 212 proceeds to step ST113 and makes a decision result of a NACK signal, which is different from the demodulation result, and outputs this to scheduler 251.

Thus, only when the demodulated signal is an ACK signal and this ACK signal has a high confidence does ACK/NACK decider 212 determine that the demodulated signal (that is, the received signal) is an ACK signal and output this decision result to scheduler 251. Accordingly, when the demodulated signal is a NACK signal, or when the demodulated signal is an ACK signal and has a low confidence does ACK/NACK decider 212 determine that the demodulated signal (that is, the received signal) is a NACK signal and output the decision result to scheduler 251.

Thus, at base station apparatus 200, in ACK/NACK decider 212, when a received signal is a NACK signal, regardless of its confidence, the data is retransmitted. Consequently, at least when there is a likelihood of a data reception failure, the data is retransmitted to the communication terminal apparatus (i.e. mobile station), thereby preventing data loss at the communication terminal apparatus.

By contrast with this, in ACK/NACK decider 212, when a received signal is an ACK signal, its confidence is determined so as to determine whether this ACK signal of the demodulation result (i.e. the received result) is an ACK signal as a result of successful reception or an ACK as a result of failed reception. That is, if it is an ACK signal as a result of successful reception, scheduler 251, based on this ACK signal, does not have to retransmit the data and is able to transmit the next data. By contrast with this, if it is an ACK signal as a result of failed reception, since not retransmitting the data based on this ACK signal results in loss of data at the communication terminal apparatus, in this case, ACK/NACK decider 212 determines that this ACK signal is a NACK signal, and scheduler 251, based on this decision result, retransmits the data, thereby preventing data loss at the communication terminal apparatus.

Thus, at base station apparatus 200, in confidence calculator 211 and ACK/NACK decider 212, the processing steps shown in FIG.9 are implemented, thereby enabling scheduling in such a way that causes no data loss at the communication terminal apparatus.

Scheduler 251 determines the communication terminal apparatus (hereinafter "destination apparatus") to transmit packets to based on the CQI signals and the packet transmission control signals from the communication terminal apparatuses and outputs information representing the destination apparatus to buffer (Queue) 252. Thereupon scheduler 251, when receiving an ACK signal, instructs buffer 252 to transmit new data as an ACK/NACK decision result, and, when receiving a NACK signal, instructs buffer 252 to retransmit the previously transmitted data as an ACK/NACK decision result. In addition, scheduler 251 determines the modulation scheme and the coding rate based on the CQI signal from the destination apparatus, and gives instructions to modulator (MOD) 253. Furthermore, scheduler 251 outputs a signal that serves as a reference upon determining transmission power for the packet data to transmission power controller (POWER-CON) 254. Incidentally, the transmission power control schemes of the present invention are by no means limited, and it is equally possible not to perform transmission power control on the packet data. In addition, scheduler 251 outputs a signal (hereinafter "HS-SCCH signal") to be transmitted to the destination apparatus on the HS-SCCH to amplifier 261. The HS-SCCH signal contains information (TFRI) that represents the timing to transmit the packet data and the coding rate and modulation scheme for the packet data.

Buffer 252 outputs the packet data for the destination apparatus specified by scheduler 251 to modulator 253.

Modulator 253, following the instructions from scheduler 251, performs error correction coding, modulation, and spreading on the packet data, and outputs the result to amplifier 255.

Transmission power controller 254 controls the amount of amplification in amplifier 255, and thereby controls the transmission power of the output signal from modulator 253. The output signal of amplifier 255 is a signal to be transmitted on the HS-PDSCH and is output to multiplexer 265.

Multiplexer (MUX) 256, provided in the same number as the communication terminal apparatuses engaged in wireless communication, multiplexes a pilot signal and a UL-TPC command upon the individual data (including the control signals) to be transmitted the communication terminal apparatus, and outputs the result to modulator 257.

Modulator (MOD) 257, provided in the same number as the communication terminal apparatuses engaged in wireless communication, performs error correction coding, modulation, and spreading on the output signal of multiplexer 256, and outputs the result to amplifier 259.

Transmission power controller 258, provided in the same number as the communication terminal apparatuses engaged in wireless communication, controls the amount of amplification in amplifier 259 following the DL-TPC command, and thereby controls the transmission power of the output signal from modulator 257. In addition, transmission power controller 258 outputs a signal that represents the transmission power level to transmission power controller (POWER-CON) 260. The signal amplified at amplifier 259 is a signal to be transmitted on the DPCH (including the A-DPCH), and is output to multiplexer (MUX) 265.

Transmission power controller 260 controls the amount of amplification in amplifier 261 at the transmission power level from transmission power controller 258 with an offset, and thereby controls the transmission power of the HS-SCCH signal output from scheduler 251. The signal amplified in amplifier 261 is a signal to be transmitted on the HS-SCCH, and is output to multiplexer 265. Incidentally, transmission power controller 260 may also correct the offset level depending on the condition of retransmission and the like.

Modulator (MOD) 262 performs error correction coding, modulation, and spreading on the shared control data, and outputs the result to amplifier 264. Transmission power controller (POWER-CON) 263 controls the amount of amplification in amplifier 264 and thereby controls the transmission power of the output signal from modulator 262.The output signal from amplifier 264 is a signal to be transmitted o the CPICH and the like, and is output to multiplexer 265.

Multiplexer 265 multiplexes the output signals from amplifier 255, amplifier 259, amplifier 261 and amplifier 262, and outputs the result to RF transmitter 266.

RF transmitter converts the baseband digital signal output frommultiplexer 265 into a radio frequency signal, and outputs the result to duplexer 202.

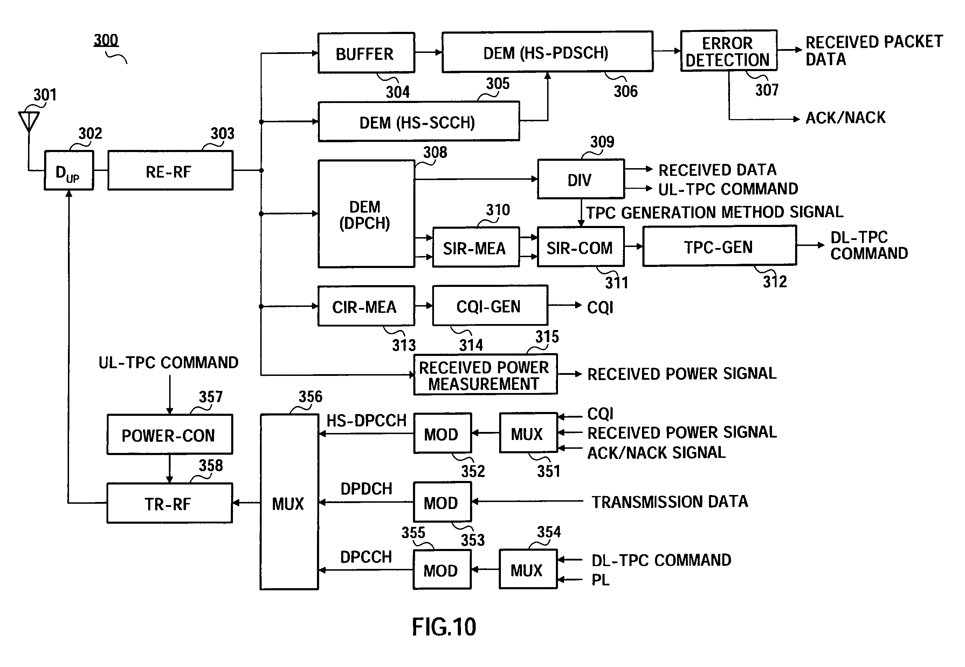

Next, the configuration of communication terminal apparatus 300 will be described with reference to the block diagram of FIG.10. Communication terminal apparatus 300 receives the individual data, the shared control data, the packet data, and the HS-SCCH signal from base station apparatus 200.

Duplexer 302 outputs a signal received at antenna 301 to RF receiver (RE-RF) 303. In addition, duplexer 302 transmits a signal output from RF transmitter (TR-RF) 358 from antenna 301 by radio.

RF receiver 303 converts the received signal of radio frequency output from duplexer 302 into a digital baseband signal, outputs the signal for the HS-PDSCH to buffer 304, outputs the signal for the HS-SCCH to demodulator (DEM) 305, outputs the signal for the DPCH to demodulator (DEM) 308, and outputs the signal for the shared control channel to CIR (Carrier to Interference Ratio) measurer (CIR-MEA) 313.

Buffer 304 saves the signal of the HS-PDSCH on a temporary basis, and outputs it to demodulator (DEM) 306.

Demodulator 305 performs demodulation processing on the HS-SCCH signal including despreading, RAKE combining, and error correction decoding, and acquires and outputs to demodulator 306 information required for demodulation of the packet data including the arrival timing of the packet data for the local apparatus and the coding rate and modulation scheme for the packet data.

Based on the information acquired at demodulator 305, demodulator 305 performs demodulation processing on the HS-PDSCH signal saved in the buffer including despreading, RAKE combining, and error correction decoding, and outputs the packet data obtained through the demodulation processing to error detector 307.

Error detector 307 performs the error detection of the packet data output from demodulator 306, and outputs, to multiplexer 351, an ACK signal when no error is detected or a NACK signal when an error is detected.

Demodulator 308 performs demodulation processing upon the DPCH signal including despreading, RAKE combining, and error correction decoding, and outputs the result to divider (DIV) 309.

Divider 309 divides the output signal from demodulator 308 into the data and the control signal. The control signal divided at divider 309 includes the UL-TPC command and the TPC generation method signal and the like. The UL-TPC command is output to transmission power controller (POWER-CON) 357, and the TPC generation method signal is output to SIR selector (SIR-COM) 311.

SIR measurer (SIR-MEA) 310 measures the received SIR of downlink channels, on a per connecting base station apparatus basis, from the desired signal level and the interference signal level measured during the demodulation process, and outputs all measured received SIRs to SIR selector 311.

When the TPC generation method signal represents a TPC command generation method of composite standard, SIR selector 311 outputs the composite level of the received SIR's to TPC command generator 312. On the other hand, when the TPC generation method signal represents a TPC command generation method of primary standard, SIR selector 311 outputs only the SIR of the signal transmitted from the primary base station apparatus to TPC command generator (TPC-GEN) 312.

TPC command generator 312 generates a DL-TPC command according to the relationship between the received SIR output from SIR selector 311 and the target SIR in terms of scale, and outputs it to multiplexer (MUX) 354.

CIR measurer 313 measures the CIR using the signal of the shared control channel from the primary base station apparatus, and outputs the measurement result to CQI generator (CQI-GEN) 314. CQI generator 314 generates a CQI signal based upon the CIR of the signal transmitted from the primary base station apparatus, and outputs the result to multiplexer (MUX) 351.

Received power measurer 315 measures the received power of the shared control channels from other nearby base station apparatuses than the primary base station apparatus, and outputs a received power signal to multiplexer 351.

Multiplexer 351 multiplexes the CQI signal, the received power signal, and the ACK/NACK signal, and outputs the result to modulator (MOD) 352. Modulator 352 performs error correction coding, modulation, and spreading on the output signal from multiplexer 351, and outputs the result to multiplexer (MUX) 356.

Modulator (MOD) 353 performs error correction coding, modulation, and spreading on the data that is to be transmitted to base station apparatus 200, and outputs the result to multiplexer 356.

Multiplexer 354 multiplexes the DL-TPC command and the pilot signal, and outputs the result to modulator (MOD) 355. Modulator 355 performs error correction coding, modulation, and spreading on the output signal from multiplexer 354, and outputs the result to multiplexer 356.

Multiplexer 356 multiplexes the output signals from modulator 352, modulator 353, and modulator 355, and outputs the result to RF transmitter 358. In this multiplexing, code multiplexing is performed using different spreading codes between the ACK/NACK signal and the pilot signal.

Transmission power controller 357 controls the amount of amplification in RF transmitter 358 following the UL-TPC command, and thereby controls the transmission power of the output signal from multiplexer 356. Incidentally, when a plurality of base station apparatuses are connected, transmission power controller 357 performs control such that transmission power is increased only when all the UL-TPC commands instruct to increase the transmission power.

RF transmitter 358 amplifies the baseband digital signal output from multiplexer 356, converts it into a radio frequency signal, and outputs the result to duplexer 302.

Given the above configurations, base station apparatus 200 determines whether or not to retransmit the data based upon the ACK signal or the NACK signal transmitted from the communication terminal apparatus (i.e. mobile station).

That is, base station apparatus 200 is configured not to retransmit the data and retransmit the next data, when determining that a received signal is an ACK signal. Therefore, when an decision is made that this ACK signal has been received, depending on its confidence, there is a likelihood of data loss in the communication terminal apparatus.

So, based on the confidence of the receivedACK signal, base station apparatus 200 of the present invention decides between determining that this ACK signal is an ACK signal and moving onto transmitting the next data, and determining that it is a NACK signal and retransmitting the data.

By this means, even when the signal originally output from the communication terminal apparatus is a NACK signal and base station apparatus 200 erroneously receives this for an ACK signal, still, based on its confidence, it is possible to determine to have received a NACK signal. In other words, on the assumption that a deteriorated SIR results in a reception error, this SIR is found as the confidence, and the presence or absence of a reception error is determined based on this confidence.

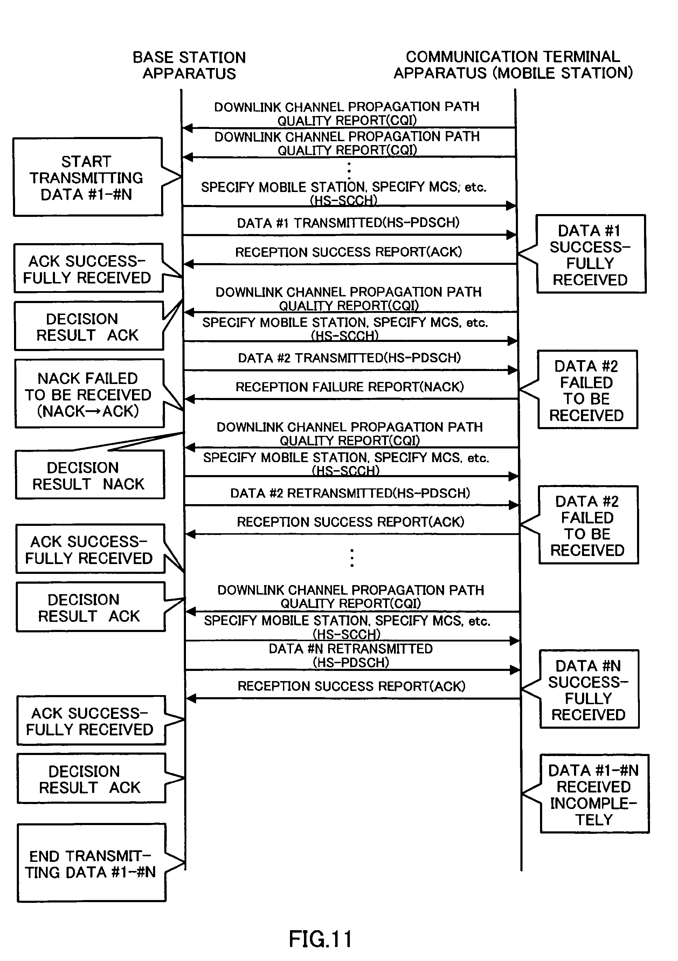

Now, FIG.11 is a sequence diagram showing the steps of data transmission and reception between base station apparatus 200 and communication terminal apparatus (i.e. mobile station apparatus) 300. As shown in this FIG.11, when a reception success report by means of an ACK signal is transmitted from communication terminal 300 that has successfully received data #1 to base station apparatus 200, base station apparatus 200, based on the confidence of this ACK signal, determines whether this ACK signal is a real ACK signal or a result of an erroneously received NACK signal.

In this case, provided that communication terminal apparatus 300 has in fact transmitted an ACK signal and the confidence is above a predetermined threshold level, base station apparatus 200 determines that this ACK signal is reliable, and, as if having received this ACK signal, transmits data #2 following data #1.

In addition, when communication terminal apparatus 300 fails to receive this data #2, communication terminal apparatus 300 transmits a reception failure report by means of a NACK signal. When base station apparatus 200 fails to receive this NACK signal, base station apparatus 200 erroneously determines that the demodulated received signal is an ACK signal. However, in such cases, the SIR is usually low, and, based on the confidence of this received signal, base station apparatus 200 determines that the signal received as an ACK signal is a NACK signal.

By this means, even when base station apparatus 200 erroneously determines to have received an ACK signal, still, based on the confidence of this signal, base station apparatus 200 determines to have received a NACK signal and thereby securely retransmits data #2 that really needs to be retransmitted. By this means, communication terminal apparatus 300 has data #2 that has once failed to be received retransmitted thereto, so that it is possible to prevent the occurrence of data loss.

Thus, with base station apparatus 200 of the present embodiment, when the confidence of a received ACK signal is low, this signal is determined to be a NACK signal and the data is retransmitted, so that it is possible to prevent data loss in the communication terminal apparatus and a decrease in transmission efficiency.

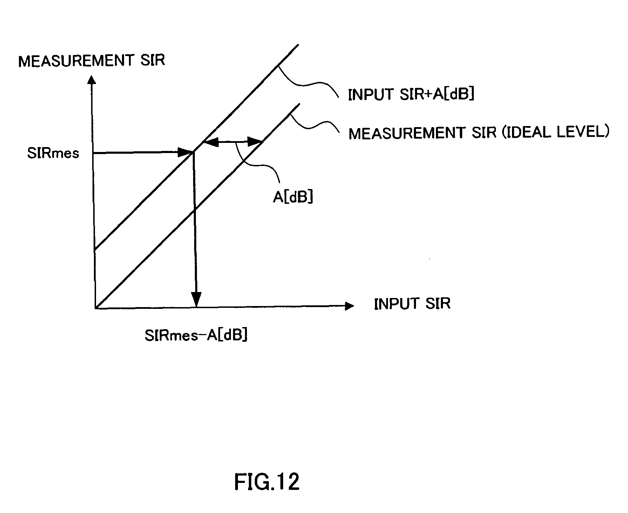

Although a case has been described with the above embodiment where the table prescribed in ACK/NACK decider 212 is the one described above with reference to FIG.8, the present invention is by no means limited to this. As shown in FIG.12, for example, it is equally possible to find, given the measured SIR level (SIRmes), a level that is a fixed range (A [dB]) lower than the ideal measurement SIR as the input SIR, and, furthermore, combine this calculation method shown in FIG.12 with the calculation method described above with reference to FIG.8.

In addition, although a case has been described with the above embodiment where the decision threshold level in ACK/NACK decider 212 is fixed (i.e. SIRworst in FIG.8 and SIRmes-A in FIG.12), the present invention is by no means limited to this, and it is equally possible to make the decision threshold level variable.

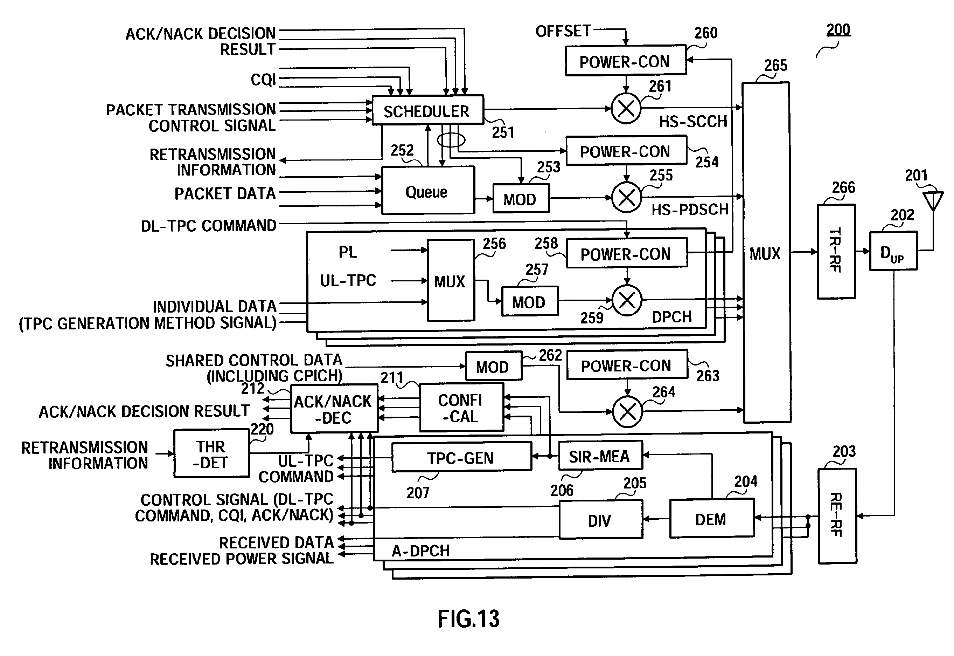

Now, FIG.13, in which the parts corresponding to those in FIG.7 are assigned the same numerals, is a block diagram showing the configuration of base station apparatus 200 where the decision threshold level is made variable. As shown in this FIG. 13, base station apparatus 200 outputs retransmission information, which is determined in scheduler 251, to threshold level determiner (THR-DET) 220. When a retransmission occurs in the upper layer, threshold level determiner 220 determines that there has been a reception failure, that is, the data is lost at communication terminal apparatus 300, and makes the threshold level greater to make the standard for the ACK decision more strict.

By contrast with this, when no retransmission occurs in the upper layer, the threshold level is made smaller to make the standard for the ACK decision less strict.

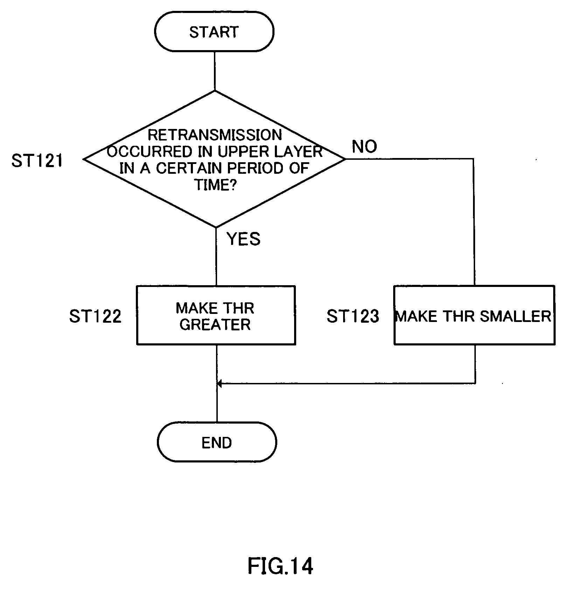

The steps of this threshold level decision processing are shown in FIG.14. FIG.14 is a flowchart showing the steps of the threshold level decision processing at threshold level determiner 220. Referring to this FIG.14, in step ST121, threshold level determiner 220 determines whether or not a data retransmission occurred in the upper layer (i.e. decision result at the scheduler and the like) in a certain period of time.

When a positive result is obtained then, this means that a data retransmission has occurred in the upper layer, that is, that there is a high likelihood for erroneously receiving a NACK signal transmitted from communication terminal 300 as an ACK signal, and then, threshold level determiner 200 moves onto step ST122 and makes the confidence threshold level at ACK/NACK decider 212 (i.e. SIRworst in FIG.8 and SIRmes-A in FIG.12) greater.

By this means, the standard for determining a signal received as an ACK signal as an ACK signal straight becomes more strict.

By contrast with this, when a negative result is obtained in step ST121, this means that there has been no data retransmission, that is, that there is a high likelihood t hat the signal that is transmitted from communication terminal apparatus 300 is an ACK signal, and then, threshold level determiner 220 moves onto step ST123 and makes the confidence threshold level at ACK/NACK decider 212 (SIRworst in FIG.8 and SIRmes-A in FIG.12) smaller.

By this means, the standard for determining a signal received as an ACK signal as an ACK signal straight becomes less strict.

Thus, according to the configurations of FIG.13 and FIG.14, when there is a high likelihood that a NACK signal is transmitted from communication terminal apparatus 300, the standard for determining a signal received at base station apparatus 200 as an ACK signal is made strict, so that it is possible to more strictly prevent determining a NACK signal from to be an ACK signal due to a reception error.

In addition, although a case has been described with the above embodiment where the SIR is used as the confidence, the present invention is by no means limited to this, and it is equally possible to use, for example, SNR (Signal to Noise power Ratio, SINR (Signal to Interference plus Noise power Ratio, and CIR (Carrier Interference Ratio).In such cases, it is possible to measure the reception SINR in SIR measurer 206 of base station apparatus 200 and, by subtracting the interference component from this result, find the SNR. Moreover, the CIR is measured from the pre-modulation signal output from RF receiver 203 (see FIG.7). Furthermore, finding the confidence from received signals from a short period of time (e.g., 2 [ms]) will produce variations in the likelihood found. Accordingly, to solve this problem of variation, in addition to the method of adding a fixed offset or worst-level margin to the confidence as described above with reference to FIG.8 and FIG.12, it is equally possible to employ other methods including the method of using the average of the confidences of the ACK signals or NACK signals received, and the method of using the average SIR of uplink dedicated physical control channels (UL-DPCCH) as the confidence.

Moreover, although a case has been described with the above embodiment where the method of measuring the received SIR of uplink channels from the desired signal level and the interference signal level measured during the demodulation process makes use of the received symbol corresponding to an ACK/NACK signal, the present invention is by no means limited to the method of finding the confidence from the received symbol of one time, and it is equally possible to find the confidence based on the received symbols of ACK signals or NACK signals from a plurality of times of measurement.

In addition, although a case has been described with the above embodiment where the method of measuring the received SIR of uplink channels from the desired signal level and the interference signal level measured during the modulation process makes use of the received symbol corresponding to an ACK/NACK signal, the present invention is by no means limited to this, and it is equally possible to find the confidence based on the received symbol corresponding to the code-multiplexed or time-multiplexed pilot signal from the communication terminal apparatus. In such cases, the present invention is by no means limited to the method of finding the confidence from the received symbol of one time, and it is equally possible to find the confidence based on the received symbols of the pilot signals from a plurality of times of measurement.

Incidentally, although communication terminal apparatus 300 of FIG.10 described above has been shown to perform despreading processing using different spreading codes between the ACK/NACK signal and the pilot signal and thereby code-multiplex the pilot signal upon the ACK/NACK signal, instead, it is equally possible to time-multiplex the pilot signal upon the ACK/NACK signal. In such cases, referring to FIG.10, the ACK/NACK signal and the pilot signal are inputted into multiplexer 351 and are multiplexed in multiplexer 351.

Further, although a case has been described with the above embodiment where the method of measuring the received SIR from the desired signal level and the interference signal level measured during the modulation process makes use of the received symbol corresponding to an ACK/NACK signal, the present invention is by no means limited to this, and it is equally possible to use the average level of the confidence found from the ACK or NACK signal and the confidence found from the pilot signal with a consideration of power offset of the pilot signal and thus find the confidence using both the ACK signal or NACK signal and the pilot signal.

Furthermore, although the channels described in the above embodiment adopt the names used in W-CDMA systems, the present invention is by no means limited to W-CDMA systems and is equally applicable to other systems that perform packet transmission on downlink channels.

Furthermore, although a case has been described with the above embodiment where the present invention is applied to the base station apparatus, the present invention is by no means limited to this and is broadly applicable to apparatuses that perform communications. In such cases, the mode of communication is by no means limited to wireless communication, and wire communication is equally applicable.

Furthermore, although a case has been described with the above embodiment where when only an ACK signal is received is the ACK/NACK decision performed based on its confidence (see FIG.9), the present invention is by no means limited to this, and it is equally possible to perform the decision when an NACK signal is received, based on its confidence.

As clear from the above descriptions, according to the present invention, data retransmission is determined at the communication apparatus based on the confidence of a positive acknowledgement signal (i.e. ACK signal), so that when a negative acknowledgment signal (i.e. NACK signal) is erroneously received for a positive acknowledgment signal (i.e. ACK signal), it is still possible to avoid the situation where data the data is not retransmitted from the communicating apparatus.

The present application is based on Japanese Patent Application No.2002-223828 filed on July 31, 2002, entire content of which is expressly incorporated herein by reference.

### Industrial Applicability

The present invention is suitable for use for communication apparatuses and data retransmission control methods for use in wireless communication systems where high-speed packet transmission is performed on downlink channels.

## Claims

1. A communication apparatus comprising:
a confidence calculator that, when a signal that represents a result of a reception of data at a communicating apparatus is received, finds a confidence of this signal;
a decider that, based upon a calculation result in the confidence calculator, makes a decision as to whether the signal received is a positive acknowledgment signal that represents a success of the reception at the communicating apparatus or a negative acknowledgment signal that represents a failure of the reception; and
a retransmission controller that, based upon a decision result in the decider, performs a retransmission control of the data.

2. The communication apparatus according to claim 1, wherein, when the received signal is the positive acknowledgment signal, the decider makes the decision based on the calculation result.

3. The communication apparatus according to claim 1, wherein the confidence calculator uses a reception quality on a downlink channel from the communicating apparatus for the confidence.

4. The communication apparatus of claim 3, wherein the reception quality is found based on a received symbol corresponding to the positive acknowledgment signal or the negative acknowledgment signal transmitted from the communicating apparatus.

5. The communication apparatus according to claim 4, wherein the reception quality is found based on positive acknowledgment signals or negative acknowledgment signals transmitted from the communicating apparatus in a plurality of times of transmissions.

6. The communication apparatus according to claim 3, wherein the reception quality is found based on a received symbol corresponding to a pilot signal multiplexed upon the positive acknowledgment signal or the negative acknowledgment signal transmitted from the communicating apparatus.

7. The communication apparatus according to claim 6, wherein the reception quality is found based on pilot signals transmitted from the communicating apparatus in a plurality of times of transmissions.

8. The communication apparatus according to claim 3, wherein the reception quality is found based on a received symbol corresponding to the positive acknowledgement signal or the negative acknowledgment signal transmitted from the communicating apparatus and based on a received symbol corresponding to a pilot signal transmitted from the communicating apparatus.

9. The communication apparatus according to claim 8, wherein the reception quality is found based on plurality of times of positive acknowledgment signals or negative acknowledgment signals and based on a plurality of times of pilot signals.

10. The communication apparatus according to claim 3, wherein the confidence calculator makes a minimum measured reception quality level estimated from a measured reception quality the confidence, based on a relationship between a maximum measured reception quality level and a level representing an actual reception quality that is configured in the form of a table,

11. The base station apparatus according to claim 1, further comprising a threshold level determiner that changes a decision threshold level in the decider according to a presence and absence of a retransmission of the data.

12. A data retransmission control method comprising:
a confidence calculation step of finding a confidence of a received signal when this signal represents a result of a reception of data at a communicating apparatus;
a decision step of making a decision as to whether the received signal is a positive acknowledgment signal that represents a success of the reception at the communicating apparatus or a negative acknowledgment signal that represents a failure of the reception based upon a calculation result in the confidence calculation step; and
a retransmission control step of performing a retransmission control on the data based upon a decision result in the decision step.
